## Europäisches Patentamt

## European Patent Office

## Office européen des brevets

(19)

(11) Publication number: **0 154 521**

**A2**

(12)

# EUROPEAN PATENT APPLICATION

(21) Application number: **85301382.9**

(22) Date of filing: **28.02.85**

(51) Int. Cl.⁴: **B 63 B 3/13**
**B 63 B 22/00**

(30) Priority: **02.03.84 GB 8405535**

(43) Date of publication of application:
**11.09.85 Bulletin 85/37**

(84) Designated Contracting States:
**AT BE CH DE FR GB IT LI LU NL SE**

(71) Applicant: **Balmoral Group LIMITED**
**Hareness Road Altens Industrial Estate**
**GB-Aberdeen, Scotland AB1 4LE(GB)**

(72) Inventor: **Badhams, Douglas**
**3 Kenkast Row**
**Peterculter Aberdeen Schotland(GB)**

(74) Representative: **Pratt, David Martin et al,**
**Brookes & Martin High Holborn House 52/54 High**
**Holborn**
**London. WC1V 6SE(GB)**

(54) Buoyancy material.

(57) A buoyancy material is constituted by a large number of hollow spheres supported in a matrix of an incompressible non-thermosetting material of low specific gravity.

BUOYANCY MATERIAL

This invention relates to a buoyancy material, and in particular to a liquid buoyancy material.

Buoyancy materials are used in many floating, semi-submerged, and submerged structures. The most important property of a buoyancy material is, of course, the buoyancy which it imparts to the associated structure. This buoyancy, which is known as reserve buoyancy, is defined as the density of the material subtracted from the density of the surrounding water. Traditionally, imperial units are used to define reserve buoyancy; and, as sea water has a density of 64 pounds per cubic foot, the reserve buoyancy of a material is usually stated as the density of that material (in pounds per cubic foot) subtracted from 64.

Where buoyancy materials are used in semi-submerged or submerged structures such as sub-sea structures, they must also be resistant to the compressive forces which result from the hydrostatic pressure of sea water at considerable depths. Moreover, sub-sea structure anchoring assemblies may incorporate buoyancy material; and, in the operation conditions in the North Sea, where the sea bed is up to 8,000 feet below the sea level, such buoyancy material must be capable of taking up compressive forces which are extremely high. Furthermore, servicing craft which are used to position and service such anchoring assemblies may also incorporate buoyancy material. In this connection, it should be pointed out that the pressure of sea water increases by 0.44 pounds per square inch for each foot of depth.

Syntactic foam materials are usually used as buoyancy materials in such situations. Syntactic foam is a composite material in which lightweight particles are bonded together in a matrix of high-strength resin. For buoyancy purposes, the lightweight particles are usually microspheres (that is to say small hollow glass bubbles) or macrospheres (that is to say larger, hollow spheres made of any suitable material such as plastics material). The resins concerned are thermoset materials, and a catalyst is used in the mixing process to cause crosslinking.

Syntactic foams are particularly good buoyancy materials, as they have a reserve buoyancy of up to 30 to 34 pounds per cubic foot. Moreover, they are extremely resistant to the compressive forces which result from the high hydrostatic pressures which are experienced at great depths. They are, therefore, particularly useful for filling the hollow beams which form the legs and struts of sub-sea structures and the anchoring assemblies for such structures. Not only does syntactic foam increase the buoyancy of the beams, but also its great resistance to compressive forces enables the beams to be made of thinner material, thereby reducing the cost of such structures. In this connection, it should be pointed out that, normally, steel beams for sub-sea structures have to be made considerably thicker than they need to be to support the structure, the extra thickness being to accommodate the high compressive forces of sea water at great depths.

Unfortunately, syntactic foams have a number of disadvantages. In particular, they can be expensive, and can not be reprocessed for future use. This is because the resins used are thermoset materials. Moreover, once formed, a syntactic material has a fixed shape so it is difficult to position within structures, and even more difficult to trim a buoy or other submersible structure once the material has been fitted in place. Another disadvantage of syntactic foams is that the curing process is exothermic, and so much heat can be generated that macrospheres are damaged. This can lead to a reduction in the strength of the material, which can lead to the collapse of individual macrospheres under the high hydrostatic pressures which are experienced at great depths. When this occurs, sea water can get into the material, thus resulting in a reduction in the reserve buoyancy of the material, and a reduction in the resistance to compressive forces.

Liquid buoyancy materials are known, these materials overcoming some of the disadvantages of syntactic foams. In particular, liquid buoyancy materials are re-usable, can easily be positioned within hollow structures, and, being virtually imcompressible, have a high resistance to compressive forces. Unfortunately, known liquid buoyancy materials (such as petrol) have a very small reserve buoyancy of only about 8 pounds per cubic foot, so that a large volume is required to give adequate buoyancy. Known liquid buoyancy materials are, therefore, impractical for use in place of syntactic foams in sub-sea structures.

The aim of the invention is to provide a buoyancy material which has the advantageous properties of syntactic foams, but does not have their disadvantageous properties.

The present invention provides a buoyancy material constituted by a large number of hollow spheres supported in a matrix of an incompressible non-thermosetting material of low specific gravity.

In this connection, the term "low specific gravity" should be taken to mean a specific gravity which is less than that of the liquid (usually sea water) in which the buoyancy material is to be used.

In a preferred embodiment, the matrix material is an oil having a specific gravity of about 0.85. However, it would also be possible for the matrix material to be a material (such as a paraffin wax or a thermoplastic material) which is solid at normal temperatures, but which can easily be liquified to enable the material to be re-used.

Advantageously, the buoyancy material further includes a coloured dye and a re-odorant material. The dye used can be colour graded to indicate the depth to which the buoyancy material can safely be used.

Preferably the hollow spheres are microspheres (that is to say small hollow glass bubbles) or macrospheres (that is to say larger, hollow spheres made of any suitable material such as plastics material). Where microspheres are used, it is advantageous to use a mixture of different sized microspheres. This enables the packing density (that is to say the volume of the buoyancy material occupied by the microspheres) to reach 70% to 80%.

Where the buoyancy material is a liquid buoyancy material, it will be apparent that it can be poured or pumped directly into a hollow structure such as a hollow beam of an underwater structure. It is, therefore, easy to position, and can be removed for re-use should this be desired.

As an alternative to pumping or pouring the liquid buoyancy material directly into a structure, it would also be possible to fill flexible envelopes with liquid buoyancy material, and to position these envelopes within the structures concerned. Here again, this is a relatively easy thing to do, and the envelopes are easily removable for future use. Moreover, the envelopes can be repositioned manually for the purposes of trimming. In this connection, a particularly advantageous arrangement results from filling elongate envelopes with liquid buoyancy material, as such envelopes can be wrapped round underwater pipes and girders to increase their buoyancy.

It is envisaged that buoyancy materials made in accordance with the invention will be capable of taking up the compressive forces of sea water at depths of up to 20,000 ft.

The following example illustrates the invention:-

EXAMPLE

A liquid buoyancy material was made by adding mixing a heavy oil (s.a.e. 40) and microspheres (grade B38/4000 supplied by Minnesota Mining and Manufacturing Co) in a ratio of 1.26 to 1 by weight. The oil had a specific gravity of 0.85, and the microspheres a nominal density of 0.1 grammes per cubic centimetre. The resulting mixture had a packing density of 68%. Prior to adding the microspheres to the oil, 0.05% by weight of dye (cresol un No 2076) and 0.05% by weight of a reodorant were added. The mixed liquid buoyancy material had a reserve buoyancy of 34 pounds per cubic foot.

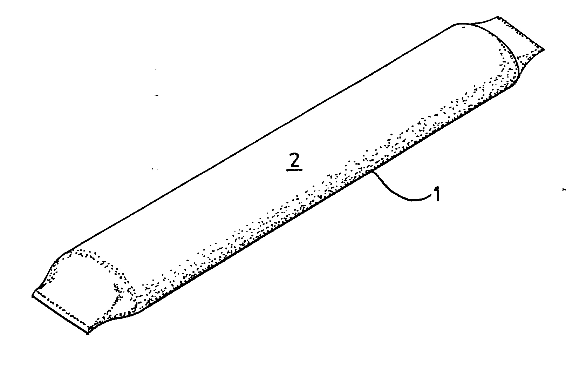

A buoyancy device constructed in accordance with the invention will now be described, by way of example, with reference to the accompanying drawing, the single figure of which is a perspective view of the device.

The drawing shows a flexible envelope 1 made of an oil-resistant plastics material such as polyethylene. The envelope 1 contains liquid buoyancy material 2 of the type described in the example. The envelope 1 could be made by sealing the ends of a tube of plastics material after the buoyancy material 2 is injected. Preferably, the envelope 1 is not filled with buoyancy material, so that the device can be wrapped round underwater pipes and girders to increase their buoyancy.

Obviously, the device described above could be modified in a number of ways. For example, the shape of the envelope could be modified to suit the application. In particular, the envelope could be shaped to fit round obstructions or to complement the shape of the underwater structure concerned.

CLAIMS

1. A buoyancy material constituted by a large number of hollow spheres supported in a matrix of an incompressible non-thermosetting material of low specific gravity.

2. A buoyancy material as claimed in claim 1, wherein the matrix material is a liquid.

3. A buoyancy material as claimed in claim 2, wherein the matrix material is an oil having a specific gravity of about 0.85.

4. A buoyancy material as claimed in claim 2 or claim 3, wherein the liquid matrix material is such that the buoyancy material can be poured or pumped directly into a hollow structure such as a hollow beam of an underwater structure.

5. A buoyancy material as claimed in claim 1, wherein the matrix material is a material which is solid at normal temperatures, but which can easily be liquified to enable the material to be re-used.

6. A buoyancy material as claimed in claim 5, wherein the matrix material is a paraffin wax or a thermoplastics material.

7. A buoyancy material as claimed in any one of claims 1 to 6, further comprising a coloured dye.

8. A buoyancy material as claimed in any one of claims 1 to 7, wherein the hollow spheres are microspheres.

9. A buoyancy material as claimed in claim 8, wherein a mixture of different sized microspheres constitutes the hollow spheres.

10. A buoyancy material as claimed in any one of claims 1 to 7, wherein the hollow spheres are macrospheres.

11. A buoyancy device constituted by a flexible envelope filled with liquid buoyancy material, the liquid buoyancy material being as claimed in any one of claims 2 to 4 or as claimed in any one of claims 7 to 10 when appendant to claim 2.